# FASCICULE DE BREVET EUROPEEN

(11) **EP 2 625 770 B1**
(45) Date de publication et mention de la délivrance du brevet: **14.01.2015**
(21) Numéro de dépôt: 11773900.3
(22) Date de dépôt: 04.10.2011
(51) Int. Cl.: H02K 1/27

(54) **ROTOR COMPORTANT DES ÉPANOUISSEMENTS POLAIRES RAPPORTÉS RECOUVRANT LES AIMANTS ET MACHINE ÉLECTRIQUE TOURNANTE**
ROTOR MIT ZUSÄTZLICHEN POLSCHUHEN FÜR DIE MAGNETEN UND ELEKTRISCHE DREHMASCHINE
ROTOR COMPRISING ADDED POLE SHOES COVERING THE MAGNETS AND A ROTARY ELECTRIC MACHINE

(30) Priorité: 07.10.2010 FR 1058141
(43) Date de publication de la demande: 14.08.2013
(73) Titulaire: Moteurs Leroy-Somer, 16000 Angouleme (FR)
(72) Inventeur: FOUQUART, Colas, F-45800 Saint-Jean-de-Braye (FR); MESSIN, Yannick, F-45150 Ferolles (FR); RIGAUD, Pierre, F-45430 Chécy (FR); VERCHÈRE, Thomas, F-45000 Orléans (FR)
(74) Mandataire: Nony
(86) Numéro de dépôt international: PCT/IB2011/054365
(87) Numéro de publication internationale: WO 2012/046190

(56) Documents cités:
- JP-A- 10 336 929
- JP-A- 2005 130 553
- JP-A- 2010 074 951

## Description

La présente invention concerne un rotor de machine électrique tournante, ainsi qu'une machine électrique tournante comportant un tel rotor.

La demande de brevet JP-10-336929 divulgue un rotor à aimants permanents dans lequel les aimants sont disposés sur des pièces formant siège, elles-mêmes fixées à un corps de rotor, les aimants étant recouverts par des épanouissements rapportés. Des vis de fixation sont engagées dans les pièces formant siège et dans les épanouissements.

On connaît également des rotors comportant des aimants enterrés, qui sont insérés dans des logements d'un empilement de tôles. Des pertes magnétiques se produisent, car une certaine partie du flux des aimants circule entre les pôles des aimants dans les portions de tôles qui s'étendent autour des logements.

L'invention vise à perfectionner encore les rotors de machines électriques tournantes, en proposant selon l'un de ses aspects un rotor, comportant :
- un moyeu comportant un empilement de tôles,
- des aimants disposés à la surface de l'empilement de tôles,
- des épanouissements polaires rapportés, recouvrant les aimants, et
- des moyens de fixation assurant le maintien des épanouissements polaires sur le moyeu.

Les moyens de fixation peuvent dans des exemples de réalisation être magnétiques.

Les aimants sont protégés par les épanouissements polaires rapportés, mais sans présenter l'inconvénient de fuites magnétiques.

La réduction des fuites magnétiques permet de diminuer la masse d'aimants nécessaire et donc d'obtenir un rotor plus économique à la fabrication. La quantité d'aimants peut par exemple être réduite.

En outre, dans l'invention, les aimants sont disposés directement à la surface du moyeu, sans utilisation de pièces formant siège, ce qui permet notamment de simplifier le montage.

L'invention permet de diminuer l'encombrement de la machine pour une puissance résultante équivalente.

La présence des épanouissements polaires rapportés permet d'éviter certaines des pertes, par courants de Foucault, notamment dans le cas de machines à vitesse de rotation relativement élevée, par exemple comprise entre 10 et 5000 trs/min, par exemple entre 800 et 2000 trs/min.

Par ailleurs, la fixation des aimants sur l'empilement de tôles est particulièrement stable. En effet, les aimants ne sont pas seulement maintenus par collage, frettage ou autoblocage au sein du paquet de tôles. Les aimants selon l'invention ne sont de préférence retenus ni par collage, ni par frettage, ni par autoblocage. Les aimants ne sont de préférence pas collés.

La machine selon l'invention peut avantageusement générer une puissance de l'ordre de plusieurs MW. La puissance générée peut notamment être comprise entre 10 kW et 20 MW.

Le rotor selon l'invention peut résulter d'un procédé de montage simple à mettre en oeuvre et garantissant une bonne sécurité lors du montage.

Le rotor peut être dépourvu de tout enroulement, en raison de la présence des aimants.

Les moyens de fixation peuvent traverser les aimants. Les aimants peuvent être percés lors de l'assemblage, ou en variante être fabriqués avec des ouvertures adéquates.

Les moyens de fixation peuvent comporter des vis, amagnétiques ou magnétiques. Les vis comportent des têtes de vis qui peuvent reposer dans des lamages ménagés dans les épanouissements polaires, débouchant sur la surface radialement extérieure de ces derniers. Les têtes de vis peuvent reposer sur des rondelles. Les têtes de vis peuvent être disposées en retrait de la surface radialement extérieure des épanouissements polaires. En variante, les vis sont remplacées par des tiges filetées et des écrous.

Les moyens de fixation peuvent être réalisés dans un matériau amagnétique. Dans le cas d'une vis par exemple, la tête et le corps peuvent être amagnétiques. Ils peuvent par exemple être réalisés dans un matériau magnétique tel que de l'acier, par exemple un acier chrome nickel A480.

Les moyens de fixation peuvent être engagés, au cours de l'assemblage du rotor, dans les épanouissements polaires par un côté radialement extérieur du rotor. Cela peut être avantageux dans le cas où le rotor compte un nombre relativement faible de pôles, par exemple moins de 10 ou 12 pôles.

Les moyens de fixation peuvent être en prise sur des barres magnétiques insérées dans l'empilement de tôles du moyeu, s'étendant sur sensiblement toute la longueur du moyeu. Une barre peut être d'un seul tenant ou en variante comporter plusieurs éléments. Les barres peuvent être retenues dans des glissières ménagées dans l'empilement de tôles. Les glissières peuvent déboucher à la surface radicalement extérieure du paquet de tôles du moyeu, ou non. Dans ce dernier cas, l'empilement de tôles du moyeu peut comporter des perçages traversants, débouchant dans la glissière et permettant le passage des moyens de fixation lors de l'assemblage. En variante, l'empilement de tôles comporte des fentes longitudinales débouchant à l'extérieur sur la circonférence du moyeu, les fentes permettant le passage des moyens de fixation. Les glissières peuvent avoir une forme de T inversé ou en variante de trapèze, par exemple.

On peut obtenir les glissières en utilisant un seul type de tôle pour le moyeu. En variante, on utilise deux types de tôles différents, ce qui peut être plus coûteux, mais permet d'obtenir des glissières non débouchantes sur le pourtour extérieur du moyeu, sauf à l'emplacement des passages pour les moyens de fixation. En variante encore, on peut utiliser des barres magnétiques en forme de T ou de trapèze, engagées dans des glissières en forme de T ou de trapèze inversé, afin d'améliorer la conduction du flux magnétique sous les aimants.

Au moins un épanouissement polaire peut comporter une pluralité d'élément empilés le long de l'axe de rotation du rotor et maintenus assemblés, de préférence par au moins un tirant, mieux au moins deux tirants longitudinaux, ou par au moins une soudure longitudinale. Le nombre de tirants peut être choisi en fonction de la largeur du pôle.

Au moins un épanouissement polaire peut être feuilleté. Il peut être composé de paquets de tôles magnétiques, isolées ou non, par exemple vernies ou oxydées, obtenues par poinçonnage ou par découpage laser, Cela peut permettre de réduire les pertes de surface par courants de Foucault, notamment de diminuer les pertes par rapport à des épanouissements qui seraient massifs, ce qui permet d'améliorer le rendement du rotor et de la machine le comportant.

En variante, au moins un épanouissement polaire et/ou au moins un élément d'un épanouissement polaire peut être massif, étant réalisé par exemple par frittage d'une poudre magnétique.

Dans un exemple de réalisation, on assemble des tôles pour réaliser des éléments sous forme de paquets de tôles, puis on assemble ces éléments pour réaliser un épanouissement polaire, qui est ensuite percé pour permettre le passage des moyens de fixation. Des lamages peuvent être usinés pour loger une partie des moyens de fixation, telle que des têtes de vis.

L'assemblage des éléments constitutifs de l'épanouissement polaire peut s'effectuer sur une table d'assemblage, comportant par exemple un socle sur lequel les éléments peuvent être disposés.

Le rotor peut comporter au niveau de chaque pôle des plaques latérales amagnétiques, de protection des aimants, disposées entre l'empilement de tôles du moyeu et chaque épanouissement polaire. Les plaques latérales sont par exemple orientées parallèlement à un rayon médian passant par l'axe de rotation, et réalisées dans un matériau amagnétique conducteur de l'électricité, tel que de l'aluminium.

Chaque pôle peut comporter au moins deux plaques latérales ou séries de plaques latérales mises bout à bout, de part et d'autre des aimants. Chaque pôle peut en outre comporter une plaque ou une série de plaques intercalaires, disposées entre deux aimants ou deux rangées d'aimants s'étendant côte à côte.

Par « série de plaques » on désigne une pluralité de plaques disposées bout à bout, se succédant le long de l'axe longitudinal du rotor. Une série de plaques peut être remplacée par une seule plaque dont la longueur équivaut sensiblement à la somme des longueurs des plaques de la série, les longueurs étant mesurées le long de l'axe longitudinal du rotor.

Les plaques latérales et/ou intercalaires sont de préférence engagées dans des glissières formées entre l'empilement de tôles du moyeu et les épanouissements polaires.

A cet effet, l'empilement de tôle du moyeu peut comporter des reliefs permettant de guider des premiers bords longitudinaux des plaques. Les épanouissements polaires peuvent comporter des reliefs longitudinaux permettant de guider des deuxièmes bords longitudinaux des plaques, opposés aux premiers bords longitudinaux.

L'empilement de tôles du moyeu peut comporter des gorges longitudinales ménagées entre les pôles, par exemple ayant un profil se rétrécissant vers la circonférence. Ces gorges peuvent permettre le positionnement d'un outil, par exemple un vérin, utilisé pour maintenir l'épanouissement polaire écarté du moyeu pendant l'insertion des aimants entre eux et pour descendre l'épanouissement polaire sur les aimants après la mise en place des aimants.

En variante, le moyeu peut être dépourvu de telles gorges, l'insertion des aimants étant réalisée autrement

Les épanouissements polaires peuvent comporter des reliefs latéraux, s'étendant le long de l'axe longitudinal du rotor, par exemple des rainures latérales. Ces reliefs peuvent permettre le maintien des épanouissements polaires sur la table d'assemblage précitée. Cette dernière peut comporter des brides de serrage qui peuvent être introduites dans les rainures latérales.

Les reliefs présents latéralement sur l'épanouissement polaire peuvent également permettre le maintien de l'épanouissement polaire durant son montage sur le moyeu du rotor, au moyen des vérins précités.

En variante, les épanouissements polaires peuvent être dépourvus de reliefs latéraux, notamment de rainures latérales. Le montage sur le moyeu peut alors être réalisé autrement.

L'invention a encore pour objet un procédé de fabrication d'un rotor, dans lequel on fabrique un épanouissement polaire sur une table d'assemblage, puis on dispose l'épanouissement polaire ainsi fabriqué sur un moyeu du rotor en ménageant un intervalle destiné à recevoir les aimants. L'insertion de ces derniers peut s'effectuer en les disposant sur une table d'insertion disposée dans le prolongement du moyeu, puis en les poussant de la table d'insertion dans l'intervalle ménagé entre l'épanouissement polaire et le moyeu. Ensuite, l'épanouissement peut être progressivement descendu sur les aimants, grâce aux vérins précités. Les moyens de fixation peuvent alors être serrés. La table d'insertion est séparée du moyeu. La fixation de la table d'insertion dans le prolongement du moyeu peut s'effectuer à l'aide de rivets préalablement fixés au moyeu. Ces rivets peuvent demeurer ou non au sein du moyeu une fois la table d'insertion séparée du moyeu.

L'invention a encore pour objet une machine électrique tournante comportant un stator et un rotor tel que décrit plus haut. Le stator peut être de tout type, par exemple à bobinage concentré ou distribué, ou autre encore. Le rotor peut comporter un nombre de pôles compris entre 2 et 300. L'invention peut être particulièrement avantageuse pour un rotor ayant un grand nombre de pôles. En variante, le rotor peut comporter un petit nombre de pôles, par exemple moins de 12 pôles, voire moins de 10 pôles, par exemple 8 ou 6 pôles, voire 4 pôles seulement.

La machine électrique tournante peut être une machine synchrone. Elle peut être par exemple un moteur tel qu'un moteur de propulsion, un moteur de compresseur, de pompe, ou un générateur tel qu'un générateur d'éolienne, de turbine hydraulique ou de groupe électrogène.

La machine peut comporter au moins un flasque d'extrémité, supportant au moins un roulement de guidage de l'arbre du rotor, comportant au moins une ouverture ou plusieurs, permettant l'engagement et le retrait de rails permettant le guidage du rotor portant les aimants lors de sa mise en place dans le stator.

La ou les ouverture(s) peuvent être obturées par des trappes, par exemple de forme rectangulaire.

La ou les ouverture(s) peuvent être de section polygonale, notamment rectangulaire ou carrée.

Les ouvertures sont de préférence au nombre de quatre, mais leur nombre va par exemple de un à six. Les ouvertures peuvent être de préférence équiréparties angulairement autour de l'axe de rotation et disposées à une même distance de cet axe, étant par exemple symétriques les unes des autres par rapport à l'axe de rotation. Les rails viennent en prise sur le moyeu du rotor, dans les espaces inter-polaires.

Le centre de chaque ouverture se situe de préférence sur un cercle de diamètre équivalant à la distance de l'entrefer à l'axe de rotation, de manière à ce que chaque ouverture se situer face à l'entrefer. La section de chaque ouverture est par exemple comprise entre 10 et 600 cm². Les ouvertures peuvent coïncider avec des passages du rotor. En variante, le rail peut être calé entre deux pôles, notamment pour les petites machines.

Le stator peut être refroidi si nécessaire par un système de circulation d'un fluide, gazeux ou liquide, de refroidissement dans des canaux du stator, notamment comme décrit dans la demande internationale WO 2009/103924, dont le contenu est incorporé par référence.

L'invention a encore pour objet une machine électrique tournante, comportant un stator, et un rotor comportant :
- un moyeu comportant un empilement de tôles,
- des aimants disposés sur l'empilement de tôles,
- des épanouissements polaires rapportés, recouvrant les aimants, et
- des moyens de fixation assurant la fixation des épanouissements polaires sur le moyeu,
la machine comportant en outre au moins un flasque d'extrémité comportant au moins une ouverture, voire plusieurs ouvertures, permettant l'engagement et le retrait de rails de guidage du rotor lors de la mise en place du rotor dans le stator, notamment des ouvertures telles que définies ci-dessus.

Une telle machine peut présenter tout ou partie des caractéristiques précédemment mentionnées, relativement au premier aspect de l'invention.

L'invention a encore pour objet un procédé de fabrication d'une machine électrique tournante comportent un stator, et un rotor tel que décrit plus haut, dans lequel :
- on dispose des rails de guidage dans le stator, les rails étant de préférence plus longs que le rotor, les rails pouvant comporter des patins en PTFE facilitant le glissement, au moins un et de préférence deux des flasques d'extrémité étant engagé sur les rails, et
- on fait glisser le rotor le long des rails de guidage.

Le ou les flasques comportent au moins une ouverture, voire plusieurs ouvertures, permettant le passage des rails et leur retrait. Une fois les flasques assemblés au stator, le rotor est maintenu selon l'axe de rotation grâce aux roulements portés par les flasques, et l'on peut procéder au retrait des rails de guidage, par la ou les ouverture(s) du ou des flasques concernés. L'un des flasques est engagé sur les rails avant que le rotor ne soit supporté par les flasques.

Le procédé de fabrication de la machine étant de préférence entièrement mécanisé, il est plus aisé de maîtriser le positionnement des différentes pièces et de garantir une meilleure stabilité mécanique des pôles. On maîtrise ainsi mieux le bruit et les vibrations de la machine, ainsi que la répétabilité du procédé de fabrication, la mise en oeuvre de ce dernier étant plus simple et plus sûre.

En variante, la machine pourrait être fabriquée autrement.

L'invention pourra être mieux comprise à la lecture de la description détaillée qui va suivre, d'un exemple de mise en oeuvre non limitatif de l'invention, et à l'examen du dessin annexé, sur lequel :
- la figure 1 est une vue en perspective avec arraché d'une machine électrique tournante conforme à l'invention,
- la figure 2 est une vue en perspective du rotor de la figure 1,
- la figure 3 est une vue en perspective, schématique et partielle, d'une partie du rotor des figures 1 et 2,
- les figures 4a et 4b sont des vues de face d'éléments constitutifs d'un épanouissement polaire,
- la figure 5 est une vue en perspective illustrant le montage d'un épanouissement polaire sur le rotor, et
- la figure 6 est une vue en perspective, schématique et partielle, du montage d'un épanouissement polaire.

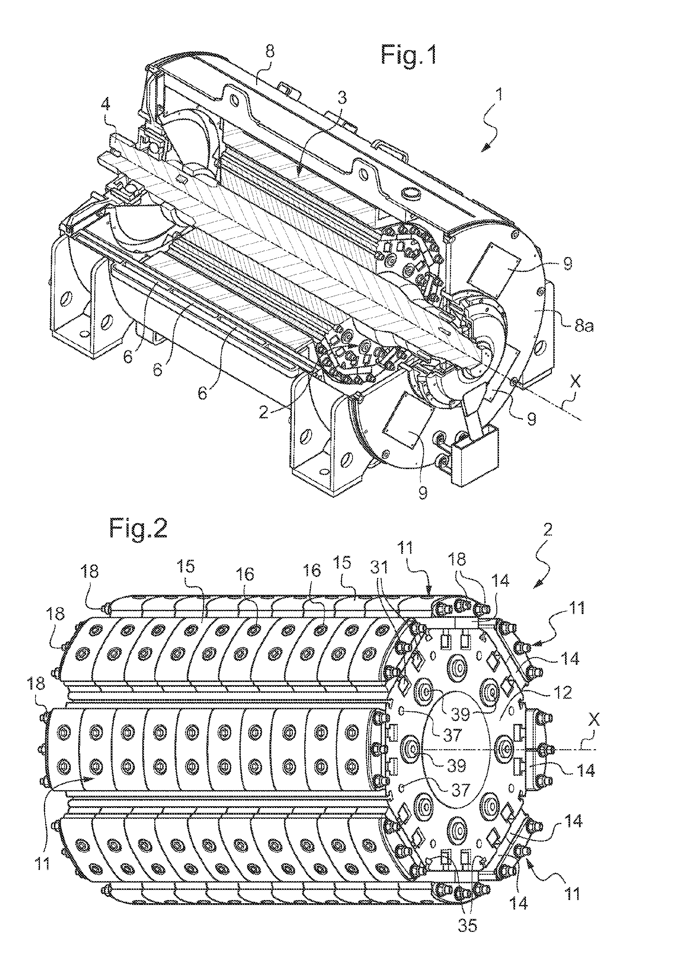

On a représenté à la figure 1 une machine électrique tournante 1 conforme à l'invention, comportant un rotor 2 et un stator 3 concentriques, le stator 3 étant extérieur et le rotor 2 intérieur, étant monté sur un arbre 4 d'axe X.

Le stator 3 comporte dans l'exemple décrit des canaux 6 dans lesquels circule un fluide de refroidissement, notamment de l'eau.

La machine 1 comporte en outre un carter 8 enfermant le stator et le rotor. Le carter 8 comporte des flasques d'extrémité 8a, supportant les roulements de l'arbre du rotor comportant des ouvertures formées par des trappes 9, dont le rôle sera expliqué plus loin.

En variante, la machine pourrait être ouverte, étant refroidie par une circulation d'air, étant alors dépourvue de flasques.

On va maintenant décrire plus en détail le rotor 2 de la machine 1, en préférences aux figure 2 à 4.

Dans l'exemple considéré, le rotor 2 comporte huit pôles 11 disposés sur un moyeu 12 comportant un empilement de tôles, Chaque pôles 11 comporte des aimants permanents 14 montés à la surface du moyeu 12, ainsi qu'un épanouissement polaire rapporté 15, recouvrant les aimants 14. Des moyens de fixation amagnétiques 16 assurent la fixation des épanouissements polaires dans le moyeu 12 sur des barres de maintien 31.

Chaque pôle 11 comporte dans l'exemple considéré deux rangées d'aimants 14 disposées côte à côte. Chaque rangée d'aimants comporte dix aimants 14 se succédant le long de l'axe de rotation X, de sorte que chaque pôle 11 comprend dans l'exemple décrit au total vingt aimants 14. L'axe NS des aimants est sensiblement radial, les pôles N et S alternant circonférentiellement.

Bien entendu, on ne sort pas du cadre de la présente invention s'il en est autrement, et si chaque pôle 11 comporte un nombre différent d'aimants 14.

Il est avantageux d'utiliser un nombre relativement élevé d'aimants 14, car cela facilite la fabrication du pôle et la manutention des aimants, ceux-ci étant relativement puissants.

L'épanouissement polaire 15 d'un pôle 11 comporte une succession d'éléments 15a le long de l'axe X, au nombre de dix dans l'exemple décrit, ce nombre pouvant être autre.

Dans l'exemple décrit, les épanouissements polaires 15 sont feuilletés. Chaque élément 15a peut être formé par l'assemblage de tôles maintenues ensemble par des agrafes ou autrement. Les éléments 15a sont maintenus empilés par des tirants 18, au nombre de trois pour chaque épanouissement polaire dans l'exemple considéré, ce nombre pouvant être différent.

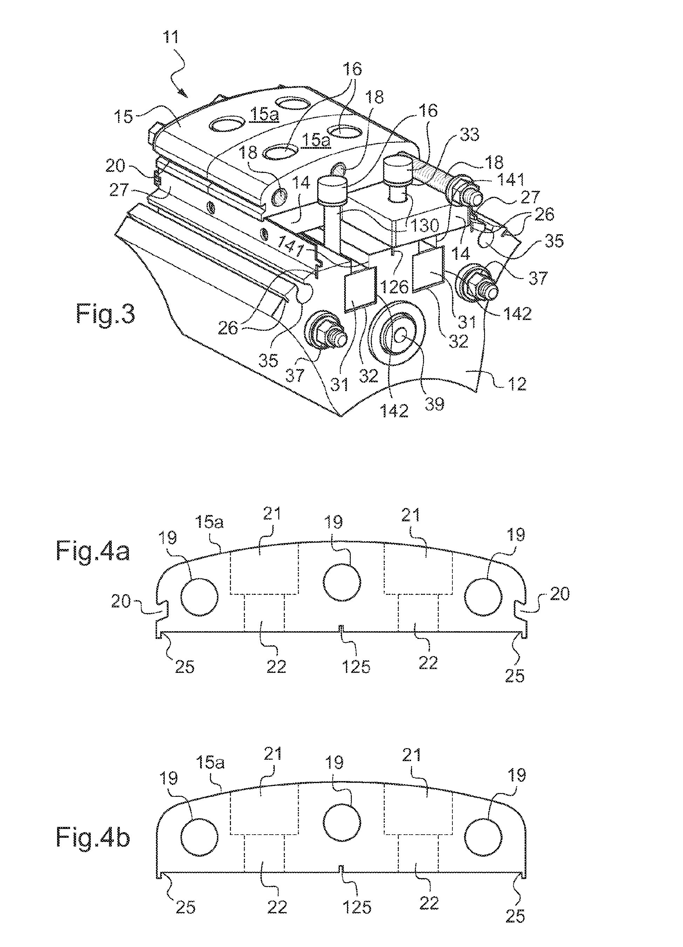

On a représenté à la figure 4a un élément 15a.

On voit sur cette figure les perçages 19 ménagés dans les tôles pour le passage des tirants 18.

Les épanouissements polaires 15 peuvent comporter des rainures latérales 20, utiles lors de leur montage, comme cela sera expliqué plus loin, ou au contraire en être dépourvu, comme illustré sur la figure 4b.

Chaque épanouissement polaire 15 comporte des passages pour les moyens de fixation 16. Dans l'exemple considéré, les moyens de fixation 16 sont des vis magnétiques comportant une tête 21 et une tige 130, toutes deux a magnétiques. Les épanouissements polaires 15 comportent des lamages 21 pour recevoir les têtes de vis et des perçages 22 pour le passage des tiges des vis. Les têtes de vis 21, une fois en place, se situent en retrait de la surface radialement extérieure de l'épanouissement polaire rapporté 15, comme illustré sur la figure 3.

Les épanouissements polaires 15 comportent en outre des nervures longitudinales 25 formant, avec des rainures longitudinales 26 correspondantes du moyeu 12, des glissières destinées à recevoir des plaques latérales 27 conductrices s'étendant entre le moyeu 12 et les épanouissements polaires 15 pour protéger latéralement les aimants 14.

Chaque épanouissement polaire 15 comporte une rainure médiane 125, s'étendant parallèlement à l'axe X, et le moyeu 12 comporte en regard de celle-ci une rainure correspondante 126, formant ainsi une glissière pour recevoir une ou plusieurs plaques intercalaires 127 non apparentes sur le dessin, disposées entre les deux rangées d'aimants 14 d'un pôle.

Les moyens de fixation 16 sont en prise avec des barres 31 insérées dans des glissières 32 du moyeu 12. Les glissières 32 sont dans l'exemple décrit en forme de T inversé, avec une fente longitudinale 141 débouchant sur une chambre élargie 142 formée à l'intérieur du moyeu 12. Les barres 31 sont de section transversale carrée ou rectangulaire. Les tiges 130 des vis 21 traversent la fente 141 et sont vissées dans des taraudages des barres 31. Des rondelles 33 disposées sous les têtes des vis améliorent la répartition de l'effort.

Les aimants 14 sont de préférence déposés directement sur la surface radialement extérieure du moyeu 12, sans utilisation de pièce intermédiaire formant siège.

Les tôles magnétiques formant le moyeu 12 pouvant être poinçonnées ou découpées au laser. Cela peut générer certaines irrégularités à la surface de l'empilement de tôles du moyeu. Afin de remédier à ces irrégularités, on peut meuler la surface de l'empilement de tôles constituant le moyeu. En variante, on peut disposer entre l'empilement de tôles et les aimants une feuille d'un matériau de protection mécanique, qui peut éventuellement être électriquement isolant, telle que du Nomex^{™}.

Le moyeu 12 comporte des gorges longitudinales 35 destinées à recevoir des pieds de vérins, ainsi que des rivets 37 pour la fixation d'une table d'insertion 40, comme cela sera décrit plus loin.

Les tôles de l'empilement formant le moyeu 12 sont retenues ensemble par des rivets 39. Elles pourraient, en variante, être directement frettées sur l'arbre de la machine.

On va maintenant décrire en détail le procédé de fabrication d'un rotor 2.

On procède à la fabrication du moyeu 12. Dans une première étape de la fabrication du moyeu 12, on empile les tôles magnétiques vernies de manière à réaliser l'empilement de tôles constituant le moyeu. On presse les tôles ensemble avant de les fixer par des rivets 39.

On installe l'empilement de tôles sur l'arbre 4 de la machine.

Indépendamment de ces étapes de fabrication du moyeu 12, on procède à la fabrication des épanouissements polaires 15.

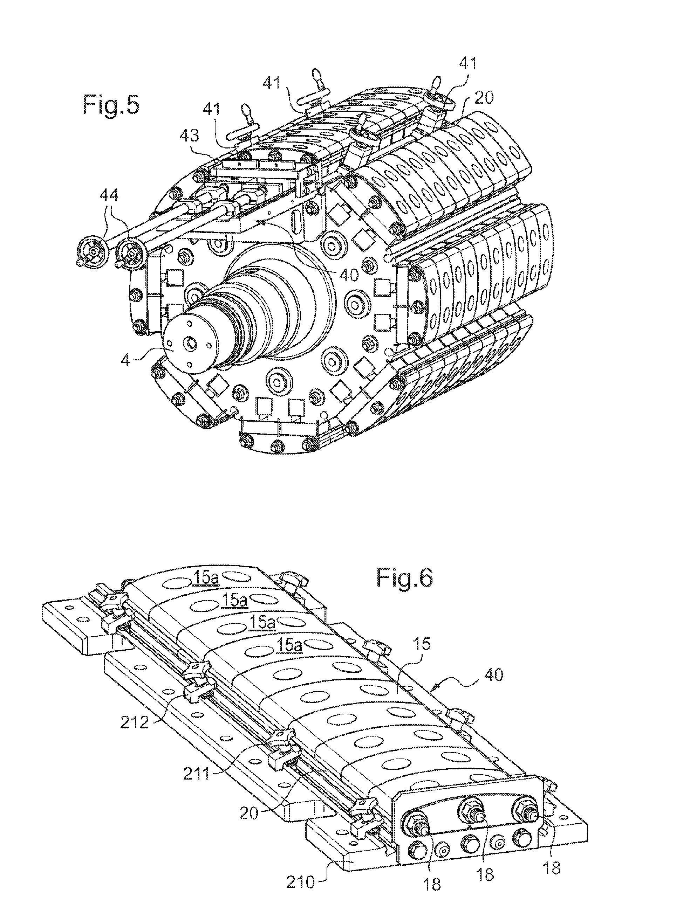

Pour ce faire, on assemble les éléments 15a sur une table de montage 40, comme illustré à la figure 6. Chaque élément 15a est constitué d'un empilement de tôles magnétiques vernies. L'épanouissement 15 peut par exemple comporter un nombre d'éléments 15a compris entre 1 et 20, notamment entre 2 et 15.

Après assemblage des éléments 15a, on les fixe au moyen de tirants 18 ou de soudures longitudinales. L'intérêt d'utiliser des tirants 18 est de mieux contrôler la pression d'assemblage des tôles.

Dans une étape ultérieure, on réalise dans l'épanouissement 15 qui vient d'être assemblé les lamages 21 et les perçages 22 destinés à recevoir les moyens de fixation 16, par exemple au nombre de vingt pour un épanouissement destiné à être fixé au moyen de vingt vis sur le moyeu.

Chaque élément 15a est plaqué contre le socle 210 de la table de montage 40 par des vis de serrage 211 qui agissent sur des brides de serrage 212 engagées dans les rainures 20.

Enfin, on met en place chaque épanouissement polaire 15 sur le moyeu 12 en le supportant à l'aide des vérins 41, dont les pieds sont engagés dans les gorges longitudinales 35, et dont les têtes sont engagées dans les rainures latérales 20, comme illustré à la figure 5et on installe une table d'insertion 340 sur le moyeu 12 en l'y fixant grâce aux rivets 37.

Les vérins 41 sont des vérins à vis dans l'exemple illustré, entraînés par des manivelles.

Les plaques 27 et 127 sont disposées entre le moyeu 12 et les épanouissements polaires 15 avant la mise en place des aimants et avant de descendre chaque épanouissement polaire 15 sur les aimants 14. Ces plaques permettent d'atténuer les courants de circulation, protègent et améliorant le guidage des aimants lorsque chaque pôle comporte deux rangées d'aimants adjacentes, avec des aimants disposés coté à côte se repoussant.

Enfin, les plaques 27 et 127 guident la mise en place des épanouissements polaires 15.

La ou les plaques intercalaires 127 peuvent être enlevées à la fin du montage, ou non. Si on les enlève, elles libèrent un espace qui permet d'améliorer la circulation d'air dans le rotor.

On insère les aimants 14 un par un entre le moyeu 12 et les épanouissements polaires 15, et entre les plaques latérales 27, en les dirigeant au moyen d'un poussoir 43 manoeuvrable avec une manivelle associée 44. Dans l'exemple illustré, la table d'insertion 340 comporte deux poussoirs 43 et deux manivelles associées 44 pour mettre en place les deux rangées d'aimants adjacentes.

La mise en place des aimants 14 peut être délicate. En effet, pour un rotor de 1 m de long, la force de rappel dûe aux aimants peut être de l'ordre de 3 tonnes. La table d'insertion 340 permet d'insérer les aimants 14 et de les amener à leur place de manière simple, aisée et fiable. Il peut être utile de bien aligner l'empilement de tôles du rotor et les épanouissements polaires 15. A cet effet, le bas de la table d'insertion 340 peut être placé en butée sur le moyeu 12.

On pose les aimants 14 dans un logement de la table d'insertion 340 qui comporte une butée de manière à empêcher la fuite des aimants. Puis l'aimant pénètre dans l'intervalle entre le moyeu et l'épanouissement polaire et se plaque par attraction magnétique au moyeu. La table d'insertion 340 peut comporter une fenêtre plus petite que l'intervalle recevant l'aimant afin de permettre un centrage plus aisé des aimants dans leur logement.

La mise en place des aimants peut être réalisée sans lubrifiant ou avec lubrifiant.

Pour finir, on préassemble, grâce aux moyens de fixation 16, l'épanouissement polaire 15 et les aimants 14 au moyeu. On abaisse ensuite les épanouissements polaires 15 sur les aimants 14 en manoeuvrant les vérins 41, et on sert les moyens de fixation 16.

Il n'est pas nécessaire d'imprégner le rotor, ce qui peut être avantageux compte-tenu de la température de fonctionnement de la machine.

Les rivets 37 permettant la mise en place de la table d'insertion peuvent être enlevés ou non. Dans le cas où ils sont laissés en place, ils participent au maintien du rotor.

Engin, dans une dernière étape, on montre le rotor 2 dans le stator 3. Pour ce faire, on dispose des rails de guidage dans le stator, les rails étant de préférence plus longs que le rotor, et les rails pouvant comporter des patins en PTFE facilitant le glissement. On insère le rotor de façon centrée dans le stator en le fraisant glisser le long des rails de guindage.

Les flasques 8a portant les roulements de l'arbre sont engagés sur les rails.

On assemble les flasques 8a avec le stator. Chaque flasque 8a comporte des ouvertures permettant le passage des rails. On peut ensuite procéder au retrait des rails de guidage, grâce aux ouvertures des flasques, puis clore les ouvertures par les trappes 9.

L'invention n'est pas limitée aux exemples qui viennent d'être décrits.

Le rotor peut notamment comporter un nombre différent de pôles.

L'expression « comportant un » est synonyme de « comportant au moins un », sauf si le contraire est spécifié.

## Revendications

1. Rotor (2) pour machine électrique tournante (1), comportant :
- un moyeu (12) comportant un empilement de tôles,
- des aimants permanents (14) disposés à la surface de l'empilement de tôles,
- des épanouissements polaires (15), recouvrant les aimants (14), et
- des moyens de fixation (16), assurant le maintien des épanouissements polaires rapportés (15) sur le moyeu (12).

2. Rotor selon la revendication 1, les moyens de fixation (16) traversant les aimants (14).

3. Rotor selon l'une des revendications précédentes, les moyens de fixation (16) étant amagnétiques, comportant notamment des vis amagnétiques (14).

4. Rotor selon la revendication précédente, les vis comportant des têtes disposées en retrait de la surface radialement extérieure des épanouissements polaires (15).

5. Rotor selon l'une quelconque des revendications précédentes, les moyens de fixation (16) étant engagés dans les épanouissements polaires (15) par un côté radialement extérieur du rotor.

6. Rotor selon l'une quelconque des revendications précédentes, les moyens de fixation magnétiques (16) étant en prise sur des barres (31) insérées dans l'empilement de tôles du moyeu (12).

7. Rotor selon la revendication précédente, les barres (31) étant retenues dans des glissières ménagées dans l'empilement de tôles du moyeu (12).

8. Rotor selon l'une quelconque des revendications précédentes, au moins un épanouissement polaire (15) comportant une pluralité d'éléments (15a) empilés le long de l'axe de rotation (X) et maintenus assemblés, notamment par des tirants (18).

9. Rotor selon l'une quelconque des revendications précédentes, comportant des plaques latérales (27) de protection des aimants, disposées entre l'empilement de tôles du moyeu (12) et les épanouissements polaires (15), les plaques étant de préférence engagées dans des glissières formées entre l'empilement de tôles du moyeu et les épanouissements polaires.

10. Rotor selon l'une quelconque des revendications précédentes, les épanouissements polaires (15) comportant des rainures latérales (20).

11. Rotor selon l'une quelconque des revendications précédentes, l'empilement de tôles comportant des gorges longitudinales (35) ménagées entre les pôles (11).

12. Machine électrique tournante (1) comportant un stator (3) et un rotor (2) selon l'une quelconque des revendications précédentes.

13. Machine selon la revendication précédente, comportant au moins un flasque d'extrémité (8a) comportant au moins une ouverture, voire plusieurs ouvertures, fermée par une trappe (9).

## Patentansprüche

1. Rotor (2) für eine sich drehende elektrische Maschine (1), mit
einer Nabe (12), die einen Stapel von Blechen aufweist, Permanentmagneten (14), die auf der Oberfläche des Blechstapels angeordnet sind,
Polschuhen (15), die die Permanentmagnete (14) überdecken, und
Befestigungsmitteln (16), die die Halterung der zugehörigen Polschuhe (15) auf der Nabe (12) sichern.

2. Rotor nach Anspruch 1, wobei die Befestigungsmittel (16) die Magnete (14) durchdringen.

3. Rotor nach einem der vorstehenden Ansprüche, wobei die Befestigungsmittel (16) unmagnetisch sind, insbesondere unmagnetische Schrauben (14) aufweisen.

4. Rotor nach dem vorstehenden Anspruch, wobei die Schrauben Köpfe aufweisen, die rückwärtig zur radialen Außenfläche der Polschuhe (15) angeordnet sind.

5. Rotor nach einem der vorstehenden Ansprüche, wobei die Befestigungsmittel (16) durch eine radiale Außenseite des Rotors in die Polschuhe (15) eingreifen.

6. Rotor nach einem der vorstehenden Ansprüche, wobei die unmagnetischen Befestigungsmittel (16) in Eingriff mit Stäben (31) stehen, die in den Blechstapel der Nabe (12) eingeführt sind.

7. Rotor nach dem vorstehenden Anspruch, wobei die Stäbe (31) in Gleitführungen gehalten werden, die in dem Blechstapel der Nabe (12) vorgesehen sind.

8. Rotor nach einem der vorstehenden Ansprüche, wobei wenigstens ein Polschuh (15) mehrere Elemente (15a) aufweist, die entlang der Rotationsachse (X) geschichtet sind und zusammengesetzt gehalten werden, insbesondere durch Anker (18).

9. Rotor nach einem der vorstehenden Ansprüche, mit Seitenplatten (27) zum Schutz der Magnete, die zwischen dem Blechstapel der Nabe (12) und den Polschuhen (15) angeordnet sind, wobei die Platten vorzugsweise in die Führungen eingreifen, die zwischen dem Blechstapel der Nabe und den Polschuhen gebildet sind.

10. Rotor nach einem der vorstehenden Ansprüche, wobei die Polschuhe (15) seitliche Nuten (20) aufweisen.

11. Rotor nach einem der vorstehenden Ansprüche, wobei der Blechstapel längliche Einkerbungen (35) aufweist, die zwischen den Polen (11) vorgesehen sind.

12. Rotierende elektrische Maschine (1) mit einem Stator (3) und einem Rotor (2) nach einem der vorstehenden Ansprüche.

13. Maschine nach dem vorstehenden Anspruch, mit wenigstens einem Außenflansch (8a), der wenigstens eine Öffnung aufweist, insbesondere mehrere Öffnungen, die durch eine Klappe (9) verschlossen ist.

## Claims

1. A rotor (2) for an electric rotary machine (1), comprising:
- a hub (12) comprising a stack of sheets,
- permanent magnets (14) arranged on the surface of the stack of sheets,
- pole shoes (15) covering the magnets (14), and
- attachment means (16) for holding the fitted pole shoes (15) on the hub (12).

2. The rotor as claimed in claim 1, the attachment means (16) passing through the magnets (14).

3. The rotor as claimed in one of the preceding claims, the attachment means (16) being amagnetic, comprising notably amagnetic screws (14).

4. The rotor as claimed in the preceding claim, the screws comprising heads set back from the radially outer surface of the pole shoes (15).

5. The rotor as claimed in any one of the preceding claims, the attachment means (16) being engaged in the pole shoes (15) via a radially outer side of the rotor.

6. The rotor as claimed in any one of the preceding claims, the amagnetic attachment means (16) being engaged on bars (31) inserted into the stack of sheets of the hub (12).

7. The rotor as claimed in the preceding claim, the bars (31) being held in slide rails arranged in the stack of sheets of the hub (12).

8. The rotor as claimed in any one of the preceding claims, at least one pole shoe (15) comprising a plurality of elements (15a) stacked along the rotation axis (X) and held together, notably by tie-rods (18).

9. The rotor as claimed in any one of the preceding claims, comprising lateral plates (27) for protecting the magnets, placed between the stack of sheets of the hub (12) and the pole shoes (15), the plates preferably being engaged in slide rails formed between the stack of sheets of the hub and the pole shoes.

10. The rotor as claimed in any one of the preceding claims, the pole shoes (15) comprising lateral grooves (20).

11. The rotor as claimed in any one of the preceding claims, the stack of sheets comprising longitudinal channels (35) arranged between the poles (11).

12. A rotary electric machine (1) comprising a stator (3) and a rotor (2) as claimed in any one of the preceding claims.

13. The machine as claimed in the preceding claim, comprising at least one end plate (8a) comprising at least one hole, or even several holes, closed by a trap door (9).
